# EUROPÄISCHE PATENTANMELDUNG

(11) **EP 2 667 466 A2**
(43) Veröffentlichungstag der Anmeldung: **27.11.2013**
(21) Anmeldenummer: 12004085.2
(22) Anmeldetag: 25.05.2012
(51) Int. Cl.: H02B 1/32, H02B 1/42, H02B 1/48

(54) **Vormontierter Photovoltaikanlagen-Anschlussschrank**

(71) Anmelder: EnWi-Etec GmbH, 84329 Rogglfing (DE)
(72) Erfinder: Wimmer, Hans, 84307 Eggenfelden (DE)
(74) Vertreter: Rothkopf, Ferdinand

(57) **Zusammenfassung**

Ein vormontierter Photovoltaikanlagen-Anschlussschrank gemäß der Erfindung umfasst: einen Wechselrichterplatz, einen DC-Eingang kommend von einem PV-Generator, eine montierte DC-Verdrahtung, die von dem DC-Eingang PV-Generator zu dem Wechselrichterplatz führt, einen DC-Anschluss kommend von und führend zu einer Batterie, eine montierte DC-Verdrahtung, die von dem DC-Anschluss Batterie zu dem Wechselrichterplatz führt, einen AC-Ausgang führend zu einem externen Netz, eine montierte AC-Verdrahtung, die von dem Wechselrichterplatz zu dem AC-Ausgang externes Netz führt, einen AC-Ausgang führend zu einem Hausnetz sowie eine montierte AC-Verdrahtung, die von dem Wechselrichterplatz zu dem AC-Ausgang Hausnetz führt.

## Beschreibung

### Hintergrund der Erfindung

Die Erfindung betrifft eine besondere Art der Vormontage eines Photovoltaikanlagen-Anschlussschranks zum Anschließen eines PV-Generators an ein Hausnetz und ein externes Netz sowie ein Verfahren zum Anschließen einer Photovoltaikanlage mit einem derartigen Photovoltaikanlagen-Anschlussschrank.

Bei Photovoltaikanlagen werden als so genannter PV-Generator Photovoltaikmodule bzw. Photovoltaik-Flächenelemente vorgesehen, die den von ihnen erzeugten Gleichstrom über eine zugehörige DC-Leitung (DC bedeutet "Direct Current", also Gleichstrom) an einen Wechselrichter liefern. Der Wechselrichter speist den von der Photovoltaikanlage erzeugten Strom als Wechselstrom bzw. AC-Strom (AC bedeutet "Alternating Current" also Wechselstrom) in ein Stromnetz. Das Stromnetz ist oftmals das öffentliche Netz, in das auch andere Energieerzeuger einspeisen. In der Vergangenheit wird verstärkt versucht den Strom nicht nur regional zu erzeugen, sondern ihn möglichst auch ortsnah zu verbrauchen. So wird insbesondere der Eigenverbrauch von Solarstrom gefördert, indem für diesen ein höherer Tarif bezahlt wird.

Für die effiziente ortsnahe Nutzung von Solarstrom ist es erforderlich, dass der PV-Generator auch an ein so genanntes Hausnetz angeschlossen wird. Dieses Hausnetz wird auch als Betriebsnetz bezeichnet und umfasst Verbraucher, die in unmittelbarer Nähe des PV-Generators angeordnet sind und direkt von diesem versorgt werden können, ohne dabei über das öffentliche Netz zu gehen. Damit darüber hinaus auch der nicht lokal verbrauchte Solarstrom eingespeist werden kann, ist in der Regel ein Anschluss an das dann als externes Netz bezeichnete öffentliche Netz vorhanden.

Für das derartige Anschließen eines PV-Generators und dessen Wechselrichter an ein Hausnetz und ein externes Netz ist ein erheblicher Aufwand an Verdrahtung notwendig, der bei gewöhnlichen Photovoltaikanlagen deren Kosten erheblich negativ beeinflusst.

### Zugrunde liegende Aufgabe

Es ist eine Aufgabe der Erfindung, eine Photovoltaikanlage zu schaffen, bei der der Aufwand für deren Anschluss erheblich reduziert und damit kostengünstiger gestaltet ist.

### Erfindungsgemäße Lösung

Die Aufgabe ist erfindungsgemäß mit einem vormontierten Photovoltaikanlagen-Anschlussschrank gemäß Anspruch 1 und einem Verfahren zum Anschließen einer Photovoltaikanlage gemäß Anspruch 11 gelöst. Vorteilhafte Weiterbildungen der erfindungsgemäßen Lösung sind in den abhängigen Ansprüchen beschrieben.

Erfindungsgemäß ist ein vormontierter Photovoltaikanlagen-Anschlussschrank geschaffen, mit einem Wechselrichterplatz, einem DC-Eingang PV-Generator kommend von einem PV-Generator, einer montierten DC-Verdrahtung, die von dem DC-Eingang PV-Generator zu dem Wechselrichterplatz führt, einem DC-Anschluss Batterie kommend von und führend zu einer Batterie, einer montierten DC-Verdrahtung, die von dem DC-Anschluss Batterie zu dem Wechselrichterplatz führt, einem AC-Ausgang externes Netz (auch "PC-Einspeisung" genannt) führend zu einem externen Netz, einer montierten AC-Verdrahtung, die von dem Wechselrichterplatz zu dem AC-Ausgang externes Netz führt, einem AC-Ausgang Hausnetz (auch "Ausgang Verbraucher" genannt) führend zu einem Hausnetz sowie einer montierten AC-Verdrahtung, die von dem Wechselrichterplatz zu dem AC-Ausgang Hausnetz führt.

Bei dem erfindungsgemäßen Photovoltaikanlagen-Anschlussschrank sind die für das Anschließen eines PV-Generators und dessen Wechselrichter sinnvollen Anschlüsse, Kabel und Steckverbindungen in richtiger Lage, Länge und Position vorhanden.

Der Vorteil der erfindungsgemäßen Vorgehensweise liegt darin, dass durch eine besondere Art der Anordnung von Bauteilen und der Verdrahtung zwischen einzelnen Bauteilen in einem Schrank bzw. einem Rack der Verdrahtungsaufwand erheblich reduziert werden kann. Insbesondere wird der Installationsaufwand verringert und die notwendigen Kenntnisse einer einfachen Elektro-Fachkraft oder eines Elektro-Installateurs reichen für die Wartung und Reparatur aus. Ferner ermöglicht es der erfindungsgemäße Photovoltaikanlagen-Anschlussschrank, dass er in einer Fabrik vormontiert wird, wodurch die Kosten für die jeweilige Verdrahtung weiter gesenkt werden können. Darüber hinaus stellen die erfindungsgemäßen Photovoltaikanlagen-Anschlussschränke Gleichteile dar, die auch für verschiede Typen und Größen von Photovoltaikanlagen und sogar für verschiedene Typen und Größen von Wechselrichtern genutzt werden können. Derartige Gleichteile führen zu dem Effekt, dass sie in großen Stückzahlen und damit besonders kostengünstig hergestellt werden können. Die Erfindung schafft damit Gleichteile in jenem Umfang, der einerseits wirtschaftlich und andererseits technisch für die Lösung der oben genannten Aufgabe zielführend ist.

Bei dem erfindungsgemäßen Photovoltaikanlagen-Anschlussschrank ist es ferner besonders einfach und kostengünstig möglich Bauteile für eine Steuerung und eine Aufzeichnung der Stromflüsse vorzusehen. Solche Funktionen sind heute teilweise in bereits käuflich erwerbbaren Bauteilen, wie insbesondere Wechselrichtern, integriert. So enthalten diese Wechselrichter nicht nur Einrichtungen für eine Stromumwandlung, sondern auch eine Sensorik der Stromflüsse, ein Batteriemanagement und/oder eine Notstromversorgung. Dennoch müssen diese Bauteile aber in die restliche Photovoltaikanlage integriert werden und dabei ihre Anschlüsse z.B. gegen Überstrom abgesichert werden. Ferner müssen mit den Bauteilen weitere Bauteile und Baugruppen kombiniert werden, so wie beispielsweise Batterien.

Mit dem erfindungsgemäßen Photovoltaikanlagen-Anschlussschrank ist diese Aufgabenstellung für jeden Installateur einfach und sicher handhabbar gelöst. Alle elektrischen Teile sind fertig vorkonfektioniert, durch entsprechende Behausung geschützt und in einer kompakten Struktur sowie auch einem ansprechenden Design bereitgestellt. Der erfindungsgemäße Photovoltaikanlagen-Anschlussschrank kann sehr einfach in ein Hausnetz integriert werden, um dort lokale Verbraucher mit Solarstrom zu versorgen. Zugleich ermöglicht er eine Zwischenspeicherung des Stroms und dadurch ein Maximieren des Eigenverbrauchs. Darüber hinaus können weitere Bauteile optional angekoppelt werden. So kann z.B. vorteilhaft ein externer Stromsensor am AC-Ausgang externes Netz oder einer daran angeschlossenen AC-Leitung angekoppelt werden. Ferner kann eine elektronische Steuereinrichtung zum Messen und Schalten der Ströme im zugehörigen Wechselrichter oder im Schaltschrank selbst integriert werden. Auf besonders einfache Weise kann z.B. eine Erdung mittels eines Anschlusses nur eines Erdungskabels für alle Bauteile realisiert werden.

Bei einer vorteilhaften Weiterbildung des erfindungsgemäßen vormontierten Photovoltaikanlagen-Anschlussschranks ist daher eine solche Schalteinrichtung zum Schalten einer Stromverbindung vom DC-Eingang PV-Generator zum AC-Ausgang Hausnetz vorgesehen. Die Schalteinrichtung dient insbesondere als Trennschalter (oder als Systemsteuerung und Trennschalter) zur wahlweisen Versorgung des Hausnetzes mit PV-Strom.

Der vormontierte Photovoltaikanlagen-Anschlussschrank gemäß der Erfindung umfasst ferner vorteilhaft eine Schalteinrichtung zum Schalten einer Stromverbindung vom DC-Eingang PV-Generator zum DC-Anschluss Batterie. Die derartige Schalteinrichtung ermöglicht ein Laden einer Batterie oder in der Regel mehrerer zugehöriger Batterien mit PV-Strom.

Ferner ist der erfindungsgemäße vormontierte Photovoltaikanlagen-Anschlussschrank vorzugsweise mit einer Schalteinrichtung zum Schalten einer Stromverbindung vom DC-Anschluss Batterie zum AC-Ausgang Hausnetz versehen. Über die derartige Schalteinrichtung kann das Hausnetz mit Strom aus der Batterie versorgt werden. Diese Funktion ermöglicht sogar einen Notstrombetrieb des erfindungsgemäßen Anschlussschranks.

Alternativ oder zusätzlich ist der vormontierte Photovoltaikanlagen-Anschlussschrank gemäß der Erfindung vorteilhaft mit einer Schalteinrichtung zum Schalten einer Stromverbindung vom DC-Eingang PV-Generator zum AC-Ausgang externes Netz versehen. Die derartige Schalteinrichtung ermöglicht ein wahlweises Abführen von PV-Strom ins externe Netz.

Der vormontierte Photovoltaikanlagen-Anschlussschrank ist auch vorzugsweise mit einem AC-Eingang kommend von einem externen Netz versehen, wobei ferner insbesondere eine montierte AC-Verdrahtung vorgesehen ist, die von dem AC-Eingang externes Netz zu dem Hausnetz führt. Der AC-Eingang dient vorteilhaft als Stromversorgung für das Hausnetz und dessen Verbraucher, wenn kein Solarstrom oder Batteriestrom zur Verführung steht. Ferner kann der AC-Eingang auch zum Versorgen der Wechselrichter-Elektronik und/oder zum Laden der Batterien genutzt werden. Dazu ist vorteilhaft eine Schalteinrichtung zum Schalten einer Stromverbindung vom AC-Eingang externes Netz über den Wechselrichter zum DC-Anschluss Batterie vorgesehen.

Dabei ist bei dem vormontierten Photovoltaikanlagen-Anschlussschrank vorteilhaft eine Schalteinrichtung zum Schalten einer Stromverbindung vom AC-Eingang externes Netz zum DC-Anschluss Batterie vorgesehen.

Vorzugsweise ist bei dem vormontierten Photovoltaikanlagen-Anschlussschrank gemäß der Erfindung auch eine Überspannungs- und/oder Überstromschutzeinrichtung zum Schützen eines zugehörigen PV-Generators, einer zugehörigen Batterie, eines zugehörigen Hausnetzes, eines zugehörigen externen Netzes und/oder insbesondere eines zugehörigen Wechselrichters gegen und/oder Überstrom vorgesehen. Auf diese Weise ist der für die zugehörige Photovoltaikanlage erforderliche Überspannungsschutz und/oder Überstromschutz bereits für den Installateur vormontiert und dieser kann sich auf weitere wichtige Funktionen der Anlage konzentrieren. Insbesondere ist damit bereits zu Beginn der Montage der gesamten Anlage für sämtliche Komponenten und sämtliche Anschlüsse ein (werksseitig sogar bereits geprüfter) Schutz gegen Überspannung und/oder Überstrom gegeben.

Besonders bevorzugt ist der erfindungsgemäße vormontierte Photovoltaikanlagen-Anschlussschrank mit einer Batterieaufnahme zum Aufnehmen einer zugehörigen Batterie versehen, wobei die Batterieaufnahme insbesondere räumlich unterhalb der Schalteinrichtungen und/oder der Überspannungs- und/oder Überstromschutzeinrichtung angeordnet ist. Mit der derartigen Weiterbildung ist ein Energiespeicher-Rack geschaffen, dass die zur Stromspeicherung erforderlichen bzw. gewünschten Batterien ebenfalls bereitstellt. Besonders bevorzugt werden acht Batterien in zwei übereinander angeordneten Reihen von je vier Batterien vorgesehen. Die Batterien sind vorzugsweise Bleibatterien. Diese bieten eine hohe Betriebssicherheit, sind wartungsfrei hinsichtlich des Nachfüllens von Wasser, haben eine hohe Zyklenfestigkeit und bieten damit ein Höchstmaß im Verhältnis der Kosten zur Lebensdauer. Die Batterieaufnahme weist insbesondere ein verschließbares Gehäuse auf, welches die Batterien gegen Schmutz, Umwelteinflüsse und gegen Berührung schützt. Die Batterieaufnahme des erfindungsgemäßen Schranks bzw. Racks umfasst auch die erforderlichen Kabel und Verbindungen, sowie vorteilhaft auch Entlüftungsschläuche und/oder Kabeldurchführungen, die vorteilhaft mit Membrantüllen gestaltet sind. Darüber hinaus weist eine eingehauste erfindungsgemäße Batterieaufnahme vorteilhaft eine passive Querlüftung auf. Schließlich kann an der derartigen Batterieaufnahme vorteilhaft ein Batteriesensor vorgesehen sein, der von der Batterie zur Steuerungseinrichtung geführt ist.

Bei dem erfindungsgemäßen vormontierten Photovoltaikanlagen-Anschlussschrank ist vorzugsweise der Wechselrichterplatz räumlich oberhalb der Schalteinrichtung und/oder der Überspannungs- und/oder Überstromschutzeinrichtung angeordnet. Auf diese Weise ist der Wechselrichter besonders vorteilhaft zugänglich und zugleich kann die vormontierte Verdrahtung in besonders vorteilhafter Art und Weise ausgeführt werden. Insbesondere sind die DC-Verdrahtungen und die AC-Verdrahtungen für eine Wechselrichtleistung am einzelnen Wechselrichterplatz von 1 kW bis 50 kW, insbesondere von 10 kW bis 40 kW, angepasst. Ferner sind vorteilhaft ein vormontierter AC-Hauptschalter und/oder eine vormontierte AC-Sicherung vorgesehen. Auch sind vorzugsweise mindestens ein Datenleitungs-Anschluss vormontiert, der mit einem Überspannungs- und/oder Überstromschutz und/oder einer AC-Sicherung betrieblich gekoppelt ist.

Die erfindungsgemäße Lösung sieht schließlich ferner entsprechend den oben genannten Vorteilen ein Verfahren zum Anschließen einer Photovoltaikanlage an ein Hausnetz und ein externes Netz mit folgenden Schritten vor: Bereitstellen einer DC-Leitung kommend von einem PV-Generator, Bereitstellen einer AC-Leitung führend zu dem externen Netz, Bereitstellen einer AC-Leitung führend zu dem Hausnetz, Bereitstellen eines vormontierten Photovoltaikanlagen-Anschlussschranks der oben genannte erfindungsgemäßen Art, Einsetzen eines Wechselrichters am Wechselrichterplatz des Photovoltaikanlagen-Anschlussschranks, Einsetzen mindestens einer Batterie in die Batterieaufnahme des Photovoltaikanlagen-Anschlussschranks und Anschließen der genannten Leitungen am Photovoltaikanlagen-Anschlussschrank.

Nachfolgend wird ein Ausführungsbeispiel der erfindungsgemäßen Lösung anhand der beigefügten schematischen Zeichnungen näher erläutert. Es zeigt:
- Fig. 1: eine Vorderansicht eines Photovoltaikanlagen-Anschlussschranks gemäß der Erfindung,
- Fig. 2: einen Schaltplan zum Anschluss des Photovoltaikanlagen-Anschlussschranks gemäß Fig. 1 an einem Hausnetz und einem externen Netz,
- Fig. 3: einen ersten Schaltplan zum Anschluss von Bauteilen des Photovoltaikanlagen-Anschlussschranks gemäß Fig. 1,
- Fig. 4: einen zweiten Schaltplan zum Anschluss von Bauteilen des Photovoltaikanlagen-Anschlussschranks gemäß Fig. 1 und
- Fig. 5: einen dritten Schaltplan zum Anschluss von Bauteilen des Photovoltaikanlagen-Anschlussschranks gemäß Fig. 1.

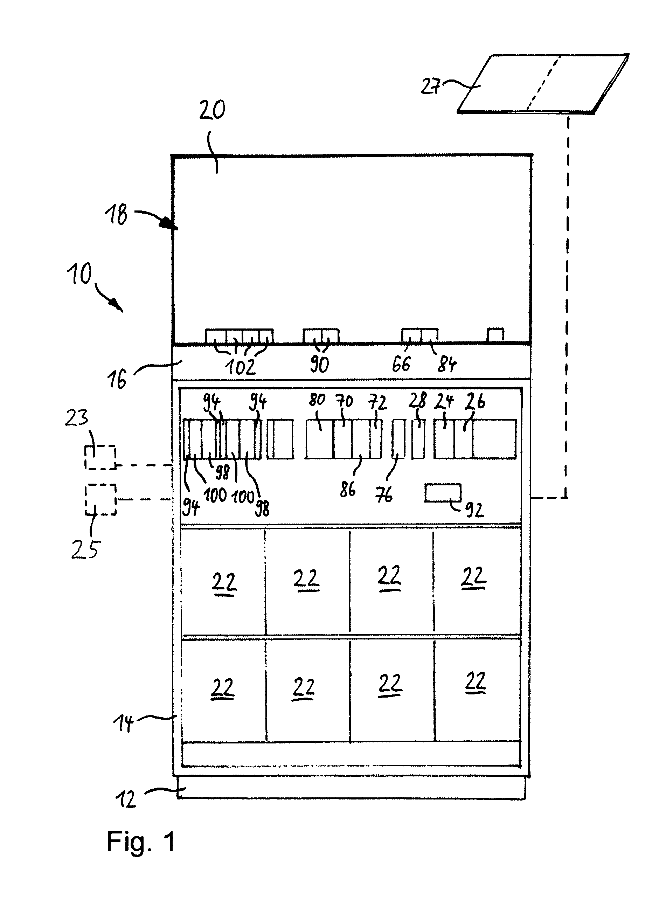

Ein Photovoltaikanlagen-Anschlussschrank 10 gemäß Fig. 1 weist einen Sockel 12 auf, auf dem sich ein quaderförmiges Gehäuse 14 befindet. Das Gehäuse 14 ist von vorne her durch eine nicht dargestellte Tür vollflächig zugänglich. An dem Gehäuse 14 ist eine rechteckige Rückwand 16 angebracht, die über das Gehäuse 14 nach oben hin übersteht. An der Rückwand 16 befindet sich dort ein Wechselrichterplatz 18, an dem wie in Fig. 1 dargestellt ein ebenfalls quaderförmiger Wechselrichter 20 angeordnet ist.

In dem Gehäuse 14 befinden sich im unteren Abschnitt in einem Rack bzw. einer Batterieaufnahme 21 insgesamt acht Batterien 22, die in zwei, sich übereinander befindenden Reihen zu je vier Batterien 22 angeordnet sind.

Räumlich über den Batterien 22 befinden sich in dem Gehäuse 14 mehrere später näher erläuterte elektrische und elektronische Bauteile sowie Verdrahtungen, mit denen eine Verschaltung des Photovoltaikanlagen-Anschlussschranks 10 mit einem externen Netz 23, einem Hausnetz 25 und einem PV-Generator 27 geschaffen ist.

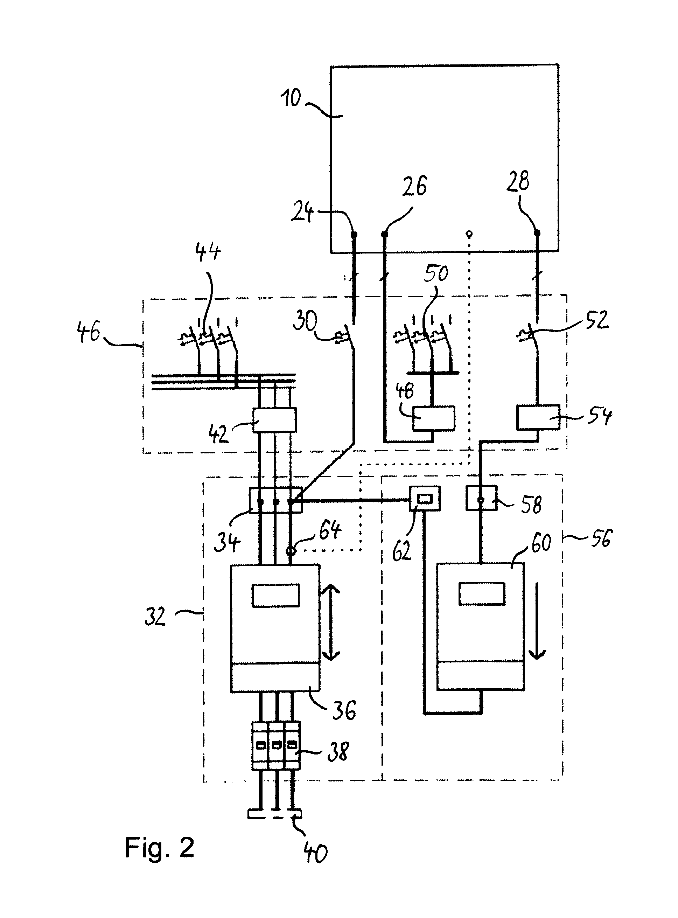

Wie in Fig. 2 dargestellt ist, verfügt der Photovoltaikanlagen-Anschlussschrank 10 dazu über einen AC-Eingang externes Netz 24, einen AC-Ausgang Hausnetz 26 und einen AC-Ausgang externes Netz 28. Der AC-Eingang externes Netz 24 ist über eine elektrische Leitung mit einer Sicherung 30 an einem Zählerfeld 32 an einer Hauptleitungsabzweigklemme 34 angeschlossen. Diese Hauptleitungsabzweigklemme 34 ist ihrerseits über eine Zähler 36 und eine Trenneinrichtung 38 mit einem Hausanschlusskasten 40 zum externen 23 elektrisch verbunden. Die Hauptleitungsabzweigklemme 34 führt ferner über einen Fehlerstromschutzschalter (FI-Schalter) 42 zu einem 3-phasigen Verteiler 44 eines Hausnetzfeldes 46 des Hausnetzes 25.

Der AC-Ausgang Hausnetz 26 ist innerhalb des Hausnetzfeldes 46 über eine Leitung und einen Fehlerstromschutzschalter 48 mit mindestens einem Verteiler 50 für Eigenverbrauchs- bzw. Notstromlasten elektrisch verbunden.

Der AC-Ausgang externes Netz 28 ist über eine Leitung mit einer Sicherung 52 und einem Fehlerstromschutzschalter 54 mit einem weiteren Zählerfeld 56 verbunden, an dem sich aufeinander folgend eine Hauptleitungsabzweigklemme 58, ein Zähler 60 und eine Trennvorrichtung Erzeugungsanlage 62 befindet. Diese Trennvorrichtung Erzeugungsanlage 62 ist über eine weitere Leitungsverbindung zur Hauptleitungsabzweigklemme 34 geführt.

Schließlich ist zur Fig. 2 noch anzumerken, dass sich an der Leitungsverbindung vom Zähler 36 zur Hauptleitungsabzweigklemme 34 ein Stromsensor 64 befindet, der ebenfalls elektrisch leitend mit dem Photovoltaikanlagen-Anschlussschrank 10 verbunden ist.

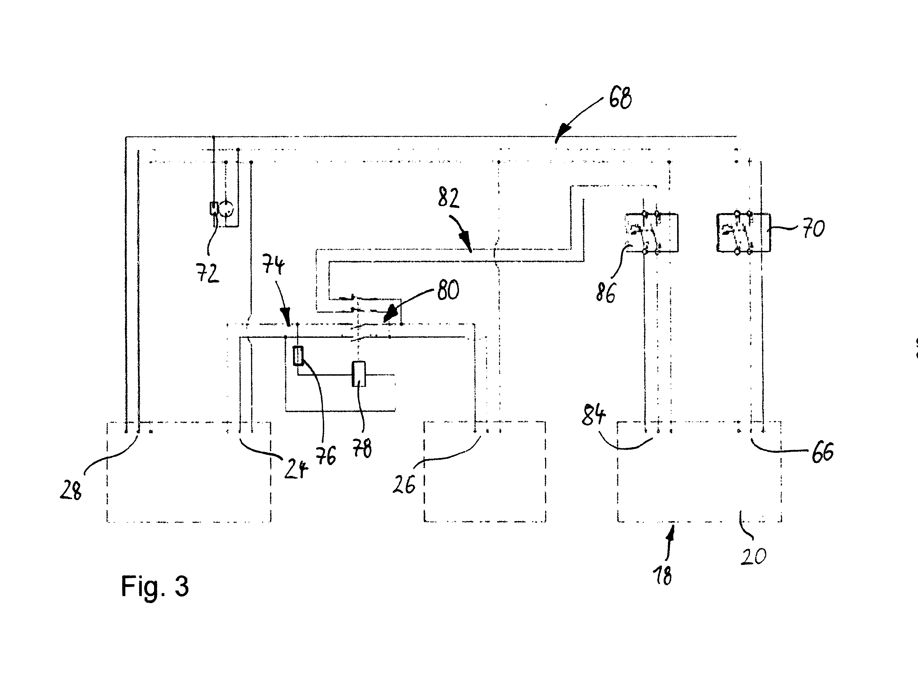

In Fig. 3 ist die am Photovoltaikanlagen-Anschlussschrank 10 vormontierte Leitungsverbindung zwischen dem AC-Ausgang externes Netz 28 sowie dem AC-Eingang externes Netz 24 zu dem AC-Ausgang Hausnetz 26 und dem Wechselrichterplatz 18 veranschaulicht. Am Wechselrichter 20 ist dazu ein mit Solarstrom speisbarer erster AC-Ausgang 66 vorgesehen, der über eine AC-Verdrahtung 68 mit dem AC-Ausgang externes Netz 28 elektrisch leitend verbunden ist. In der AC-Verdrahtung 68 befinden sich dabei als Schalteinrichtung ein manuell zu betätigender Schalter 70 (insbesondere in Form eines Leistungsschutzschalters) sowie eine Überspannungsschutzeinrichtung 72. Der AC-Eingang externes Netz 24 ist über eine AC-Verdrahtung 74 zum AC-Ausgang Hausnetz 26 geführt, wobei eine Überstromsschutzeinrichtung 76 für ein Umschaltrelais 78 mit einem Arbeitskontakt-Notstrom 80 vorgesehen ist, als Schalteinrichtung, mit der eine Notstrom-Umschaltfunktion getätigt werden kann. Mit dem Umschaltrelais-Notstrom 80 ist ferner eine AC-Verdrahtung 82 verbunden, die zu einem zweiten mit Solarstrom speisbarem AC-Ausgang 84 am Wechselrichter 18 führt, der auf diese Weise zum Versorgen des Hausnetzes 25 mit Solarstrom in Form von Wechselstrom dient. In der AC-Verdrahtung 82 befindet sich dabei ebenfalls als Schalteinrichtung ein manuell zu betätigender Schalter 86 (insbesondere in Form eines Leistungsschutzschalters).

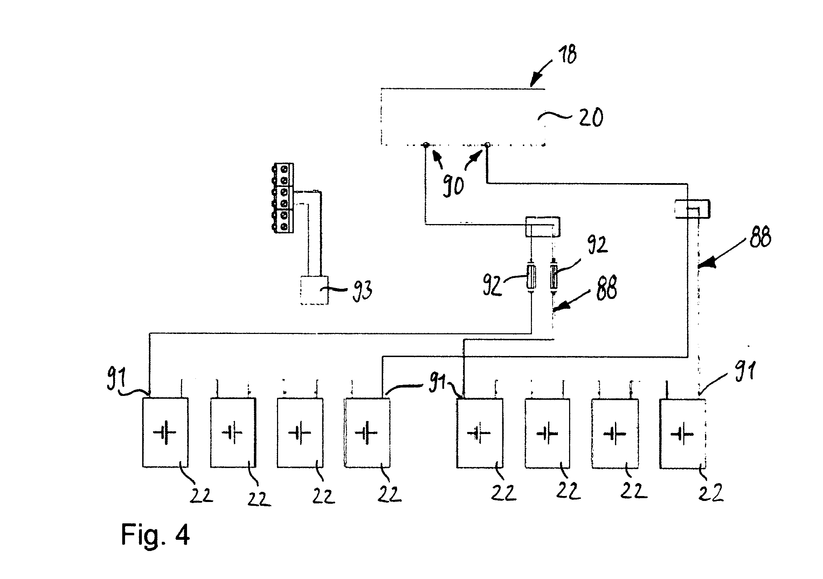

Die Fig. 4 zeigt die im Photovoltaikanlagen-Anschlussschrank 10 vormontierten Leitungsverbindungen zwischen dem Wechselrichter 20 und den Batterien 22. Die Leitungsverbindungen sind über eine DC-Verdrahtung 88 hergestellt, die von einem DC-Anschluss 90 am Wechselrichter 20 zu der jeweils ersten und letzten Batterien 22 der beiden im Gehäuse 14 angeordneten Reihen an einen DC-Anschluss Batterie 91 führt. In der DC-Verdrahtung 88 sind dabei zwei zugehörige Batteriesicherungen 92 angeordnet. Ferner zeigt die Fig. 4 noch einen Batteriesensor 93, der ebenfalls über eine Leitungsverbindung mit dem Wechselrichter 20 zu koppeln ist.

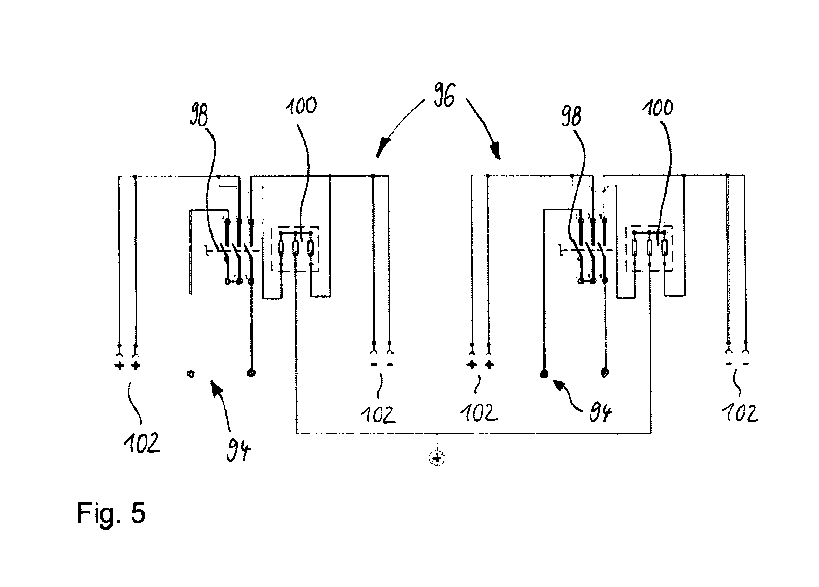

In der Fig. 5 ist die Leitungsverbindung des PV-Generators 27 an den Wechselrichter 20 über den dafür ebenfalls speziell vormontierten Photovoltaikanlagen-Anschlussschrank 10 dargestellt. Der PV-Generator 27 ist am Photovoltaikanlagen-Anschlussschrank 10 an DC-Eingängen PV-Generator 94 angeschlossen, die jeweils als Klemme gestaltet sind. Davon ausgehend ist die Leitungsverbindung mit einer DC-Verdrahtung 96 gestaltet, in der für jeden Strang des PV-Generators jeweils eine Schalteinrichtung 98 in Gestalt eines manuell betätigbaren Freischalters sowie eine Überspannungsschutzeinrichtung 100 vorgesehen sind. Die derartige Leitungsverbindung führt zu DC-Anschlüssen 102, die am Wechselrichter 20 vorgesehen sind und in die dann der vom PV-Generator 27 erzeugte Solarstrom in Form von Gleichstrom eingespeist wird.

Abschließend sei noch angemerkt, dass im dargestellten Ausführungsbeispiel die Schaltfunktionen zum wahlweisen Leiten von Strom zwischen dem PV-Generator 27, dem externen Netz 23, dem Hausnetz 25 und den Batterien 22 ferner mittels entsprechender (nicht dargestellter) Bauelemente vorgenommen werden, die in dem Wechselrichter 20 selbst bzw. dessen Gehäuse integriert sind.

### Bezugszeichenliste

- 10: Photovoltaikanlagen-Anschlussschrank
- 12: Sockel
- 14: Gehäuse
- 16: Rückwand
- 18: Wechselrichterplatz
- 20: Wechselrichter
- 21: Batterieaufnahme
- 22: Batterie
- 23: externes Netz
- 24: AC-Eingang externes Netz
- 25: Hausnetz
- 26: AC-Ausgang Hausnetz
- 27: PV-Generator
- 28: AC-Ausgang externes Netz
- 30: Sicherung
- 32: Zählerfeld
- 34: Hauptleitungsabzweigklemme
- 36: Zähler
- 38: Trenneinrichtung
- 40: Hausanschlusskasten bzw. externes Netz
- 42: Fehlerstromschutzschalter
- 44: Verteiler
- 46: Hausnetzfeld
- 48: Fehlerstromschutzschalter
- 50: Verteiler
- 52: Sicherung
- 54: Fehlerstromschutzschalter
- 56: Zählerfeld
- 58: Hauptleitungsabzweigklemme
- 60: Zähler
- 62: Trennvorrichtung Erzeugungsanlage
- 64: Stromsensor
- 66: erster AC-Ausgang am Wechselrichter (externes Netz)
- 68: AC-Verdrahtung vom ersten AC-Ausgang zum AC-Ausgang externes Netz
- 70: Schalter
- 72: Überspannungsschutzeinrichtung
- 74: AC-Verdrahtung vom AC-Eingang externes Netz zum AC-Ausgang Hausnetz
- 76: Überstromschutzeinrichtung
- 78: Umschaltrelais
- 80: Arbeitskontakt-Notstrom
- 82: AC-Verdrahtung vom zweiten AC-Ausgang zum AC-Ausgang Hausnetz
- 84: zweiter AC-Ausgang am Wechselrichter (Hausnetz)
- 86: Schalter
- 88: DC-Verdrahtung vom Wechselrichter zu den Batterien
- 90: DC-Anschluss
- 91: DC-Anschluss Batterie
- 92: Batteriesicherung
- 93: Batteriesensor
- 94: DC-Eingang PV-Generator
- 96: DC-Verdrahtung
- 98: Schalteinrichtung
- 100: Überspannungsschutzeinrichtung
- 102: DC-Anschluss

## Patentansprüche

1. Vormontierter Photovoltaikanlagen-Anschlussschrank (10) mit einem Wechselrichterplatz (18), einem DC-Eingang PV-Generator (94) kommend von einem PV-Generator (27), einer montierten DC-Verdrahtung (96), die von dem DC-Eingang PV-Generator (94) zu dem Wechselrichterplatz (18) führt, einem DC-Anschluss Batterie (91) kommend von und führend zu einer Batterie (22), einer montierten DC-Verdrahtung (88), die von dem DC-Anschluss Batterie (91) zu dem Wechselrichterplatz (18) führt, einem AC-Ausgang externes Netz (28) führend zu einem externen Netz (23), einer montierten AC-Verdrahtung (68), die von dem Wechselrichterplatz (18) zu dem AC-Ausgang externes Netz (28) führt, einem AC-Ausgang Hausnetz (26) führend zu einem Hausnetz (25) sowie einer montierten AC-Verdrahtung (82), die von dem Wechselrichterplatz (18) zu dem AC-Ausgang Hausnetz (26) führt.

2. Vormontierter Photovoltaikanlagen-Anschlussschrank nach Anspruch 1, mit einer Schalteinrichtung (20, 80, 86, 98) zum Schalten einer Stromverbindung vom DC-Eingang PV-Generator (94) zum AC-Ausgang Hausnetz (26).

3. Vormontierter Photovoltaikanlagen-Anschlussschrank nach Anspruch 1 oder 2, mit einer Schalteinrichtung (20, 98) zum Schalten einer Stromverbindung vom DC-Eingang PV-Generator (94) zum DC-Anschluss Batterie (91).

4. Vormontierter Photovoltaikanlagen-Anschlussschrank nach einem der Ansprüche 1 bis 3, mit einer Schalteinrichtung (20, 80, 86) zum Schalten einer Stromverbindung vom DC-Anschluss Batterie (91) zum AC-Ausgang Hausnetz (26).

5. Vormontierter Photovoltaikanlagen-Anschlussschrank nach einem der Ansprüche 1 bis 4, mit einer Schalteinrichtung (20, 70) zum Schalten einer Stromverbindung vom DC-Eingang PV-Generator (94) zum AC-Ausgang externes Netz (28).

6. Vormontierter Photovoltaikanlagen-Anschlussschrank nach einem der Ansprüche 1 bis 5, mit einem AC-Eingang externes Netz (24) kommend von einem externen Netz (23), wobei ferner insbesondere eine montierte AC-Verdrahtung (74) vorgesehen ist, die von dem AC-Eingang externes Netz (24) zu dem Hausnetz (23) führt.

7. Vormontierter Photovoltaikanlagen-Anschlussschrank nach Anspruch 6, mit einer Schalteinrichtung (20, 76, 78, 80, 86) zum Schalten einer Stromverbindung vom AC-Eingang externes Netz (24) zu dem Hausnetz (25).

8. Vormontierter Photovoltaikanlagen-Anschlussschrank nach einem der Ansprüche 1 bis 7, mit einer Überspannungs- und/oder Überstromschutzeinrichtung (72, 76, 100) zum Schützen eines zugehörigen PV-Generators (27), einer zugehörigen Batterie (22), eines zugehörigen Hausnetzes (46), eines zugehörigen externen Netzes (40) und/oder eines zugehörigen Wechselrichters (20) gegen Überspannung und/oder Überstrom.

9. Vormontierter Photovoltaikanlagen-Anschlussschrank nach einem der Ansprüche 1 bis 8, mit einer Batterieaufnahme (21) zum Aufnehmen einer zugehörigen Batterie (22), wobei die Batterieaufnahme (21) insbesondere räumlich unterhalb der Verdrahtungen (68, 82, 88, 96), der Schalteinrichtung (70, 76, 78, 80, 86, 98) und/oder der Überspannungs- und/oder Überstromschutzeinrichtung (72, 76, 100) angeordnet ist.

10. Vormontierter Photovoltaikanlagen-Anschlussschrank nach einem der Ansprüche 1 bis 9, bei dem der Wechselrichterplatz (18) räumlich oberhalb der Verdrahtungen (68, 82, 88, 96), der Schalteinrichtung (70, 76, 78, 80, 86, 98) und/oder der Überspannungs- und/oder Überstromschutzeinrichtung (72, 76, 100) angeordnet ist.

11. Verfahren zum Anschließen einer Photovoltaikanlage an ein Hausnetz (25) und ein externes Netz (23) mit den Schritten: Bereitstellen einer DC-Leitung kommend von einem PV-Generator (27), Bereitstellen einer AC-Leitung führend zu dem externen Netz (23), Bereitstellen einer AC-Leitung führend zu dem Hausnetz (25), Bereitstellen eines vormontierten Photovoltaikanlagen-Anschlussschranks (10) nach einem der Ansprüche 1 bis 10, Einsetzen eines Wechselrichters (20) am Wechselrichterplatz (18) des Photovoltaikanlagen-Anschlussschranks (10), Einsetzen mindestens einer Batterie (22) in die Batterieaufnahme (21) des Photovoltaikanlagen-Anschlussschranks (10) und Anschließen der genannten Leitungen am Photovoltaikanlagen-Anschlussschrank (10).
